# EUROPEAN PATENT APPLICATION

(11) **EP 1 430 789 A1**
(43) Date of publication of application: **23.06.2004**
(21) Application number: 03028526.6
(22) Date of filing: 10.12.2003
(51) Int. Cl.: A23L 1/00

(54) **Moisture barrier for foods**

(30) Priority: 19.12.2002 US 435253 P; 06.05.2003 US 430162
(71) Applicant: National Starch and Chemical Investment Holding Corporation, New Castle, Delaware 19720 (US)
(72) Inventor: Fenn, Melissa, Manville New Jersey 08835 (US); Merk, Angelica, Union New Jersey 07083 (US); Weisser, Eric M., Somerset New Jersey 08873 (US); Yang, Yi, Bridgwater New Jersey 08807 (US)
(74) Representative: Held, Stephan, Dr.rer.nat., Dipl.-Chem.

(57) **Abstract**

Hydrocolloids useful as a barrier in multi-component food systems for the inhibition of moisture migration and methods for using the barrier are disclosed. The hydrocolloid can be applied as a powder. The hydrocolloid containing barrier is able to inhibit the migration of moisture across the system, thereby improving the shelf life of the food product, as well as enhancing the ability of the product to survive freeze/thaw cycles. In doing so, the organoleptic qualities of the food system are enhanced.

## Description

### BACKGROUND OF THE INVENTION

**Technical Field**. The present invention relates to the use of powders in food products. More specifically, the present invention is directed towards hydrocolloids useful as a barrier in multi-component food systems for the inhibition of moisture migration.

**Background Information**. Moisture migration within multi-domain systems has been a long-standing problem and challenge in the food industry. Internal migration of moisture within heterogeneous food products can lead to premature loss of desirable sensory and nutritive properties. For example, moisture transmission from a moist filling or topping to the crust of a pie or pizza decrease shelf life and overall quality by causing undesired changes in crust texture. Further, the migration of moisture or oils can be accompanied by soluble colors, *e.g.*, in multilayed trifles where migration of color between the layers can detract from the visual appearance. Examples of other multi-domain systems include ice cream in a cone or sandwich, a pastry with a fruit filling, chocolate or hard candy with liquid centers, a cheese and cracker snack, cheesecake, and pocket sandwiches/meals.

Moisture migration in food systems depends on the amount of water and the water activity of each domain in a multi-domain food system. A multi-domain food system refers to a food system containing two or more components with varying water activities (a_{w}) and moisture contents causing a state of non-equilibrium. The water activity, or relative vapor pressure, is the chemical potential of water vapor at constant or equilibrium relative humidity. For example, migration of water from the sauce (a_{w} ∼ 0.98, 90% moisture) of a frozen pizza to the pizza crust (a_{w} ∼ 0.85, 15-25% moisture) makes the crust soggy. In addition, saltine crackers, popcorn, puffed corn curls and potato chips lose their crispness if the water activity exceeds 0.35-0.5. Examples of other water activity differences of common multi-domain food systems are listed in Table 1 below.

**Table 1.**

| Water activity gradients in heterogeneous food products | | | |
|---|---|---|---|
| High a_{w} component | | Low a_{w} component | |
| Pizza sauce | 0.98 | Pizza crust | 0.85 |
| Baked Cake | 0.9-0.94 | Cake Icing | 0.76-0.84 |
| Ice cream | 0.97 | Cookie | 0.2-0.3 |
| Refrig. Biscuit Dough | 0.94 | Pastry Filling | 0.6-0.7 |
| Ham | 0.97 | Cracker | 0.1-0.2 |
| Yogurt | 0.98 | Granola | 0.1-0.2 |

Moisture loss or gain from one region or food component to another region occurs continuously in an attempt to reach thermodynamic equilibrium with the surrounding food components and the environment. Factors such as water activity equilibrium affect the diffusion or mass transfer rate, thereby influencing the rate and amount of moisture migration. Other factors include glass transition, crystallization, surface interactions, capillary size and distribution, viscosity of the system, ingredients in the system, and temperature. Therefore, to prolong the shelf life of certain heterogeneous foods, it is necessary to stabilize the desired distribution of water contents through the above factors.

Moisture levels in foods are critical for maintaining freshness, controlling microbial growth and providing mouthfeel and texture. In addition to compromising the quality of the finished food product, moisture migration can also impede the production and distribution of the product. Solutions for inhibiting moisture migration include separate packaging, which is expensive, manipulation of chemical potential, diffusion rate, or glass transition with the addition of ingredients and use of edible barrier between the layers. Ingredients can be added to the low a_{w} component, high a_{w} component or both. Ingredients such as viscosifiers and humectants have been used to change the viscosity/molecular mobility and the water activity of food components. However, the resultant products are often texturally and organoleptically unacceptable. In addition, reformulation of the components would be product specific.

A majority of the attempts at solving the problems presented by moisture migration have focused on applying a hydrophobic film that serves as an edible barrier. For example, wax coatings applied on fruits and vegetable to prevent moisture loss have been used since the 1800's. Edible films are primarily used to extend the shelf life and quality of foods by inhibiting changes in aroma, taste, texture, appearance, or handling characteristics. A good physical moisture barrier would have a low permeability to moisture, cover and adhere well to the food product surface, withstand frozen and chiller temperatures, be flexible and resistant to breakage, have imperceptible organoleptic properties, and be easy to manufacture and apply.

Physical barriers include films or coatings that cover and adhere to the product's surface and are applied by spraying, enrobing, immersion or extrusion. Coatings, are thin pure layers of material or composites that can be eaten by the consumer as part of the whole food product. Coatings are applied and formed directly on the food product, while films are preformed, freestanding sheets applied to the surface. However, films tend to crack upon handling or with changes in temperature. Films can also give an undesirable mouthfeel.

### SUMMARY OF THE INVENTION

It has now been found that the application of a dry, cold water swellable (hydratable), edible powder to at least one surface of a food product having components of differing water activities provides superior moisture barrier properties. The water swellable material should be able to absorb water within about five (5) minutes after exposure to moisture. More preferably, the water swellable material is able to absorb water within about two (2) minutes after exposure to moisture. Even more preferably, the water swellable material is able to absorb water within about fifty (50) seconds after exposure to moisture. Most preferably, the water swellable material is able to start absorbing water nearly immediately or immediately after exposure to water. Suitable water swellable materials include cold water soluble starches, carageenan, gums (including guar, xanthan, locust bean, gellan gum, cellulose gum, konjac gum and gum arabic), methylcellulose, propylene glycol alginate and pectin.

The amount of powder applied depends on, in part, how fast the powder swells, if used in combination or alone, the swelling volume of the particular powder as well as the amount of water in the system and surface area of the substrate. Thus, high swelling volume or high viscosity swelling/hydrating powders will be utilized in amounts less than the lower swelling or low viscosity varieties.

The powders may be sprayed directly onto the food surface, or applied in any other manner that will form the moisture barrier *in situ* and is compatible with the manufacturing operation of the particular multi-domain food product. The barrier may be applied before or after baking the substrate as long as it is between the two or more components. The powders may be used in coatings or films and mixed with adhesive agents or flow aides.

### BRIEF DESCRIPTION OF THE DRAWINGS

The manner in which these objectives and other desirable characteristics can be obtained is explained in the following description and attached drawings in which:
Figure 1 is a graph illustrating the water absorbency of a non-swellable granule in comparison to a cold-water swelling ("CWS") starch as measured by a Gravimetric Absorbency Testing System ("GATS").
Figure 2 is a graph illustrating the weight gain of both swellable and non-swellable material used as moisture barriers on a food model system ("FMS").
Figure 3 is graph correlating the data from GATS measurements and FMS measurements.
Figure 4 is a bar graph illustrating the weight gain of various hydrocolloids useful as a moisture migration barrier.
Figure 5 is a graph illustrating the correlation between the settling volume and the weight gain of a FMS.
Figure 6 is a graph illustrating the effect of particle size on wicking.
Figure 7 is a graph illustrating the correlation between particle size and tap density for a modified starch base.
Figure 8 is a bar graph illustrating the effect on weight gain of various FMS when repeatedly frozen and thawed wherein the various FMS differ in the barrier applied.
Figure 9 is a bar graph illustrating a sensory evaluation of a pizza prepared with a barrier according to the present invention after freeze/thaw cycling versus a freshly prepared or 'ideal' pizza.
Figure 10 is a bar graph illustrating a sensory evaluation of a food system wherein both swellable and non-swellable starches were used as the moisture barrier.
Figure 11 is a bar graph illustrating a sensory evaluation of a food system wherein both swellable starches and other swellable hydrocolloids were used as the moisture barrier.
Figure 12 is a graph illustrating the least significant difference ("LSD") interval from a large taste test panel of a lemon pie made with the barrier according to the present invention and a lemon pie without the barrier.
Figure 13 is a graph illustrating the least significant difference ("LSD") interval from a large taste test panel of a cherry pie made with the barrier according to the present invention and a cherry pie without the barrier.

### DETAILED DESCRIPTION OF THE INVENTION

As used herein, the moisture barrier is formed from any water swellable material including cold water swelling starches, carageenan, gums (including guar, xanthan, locust bean, gellan gum, cellulose gum, konjac gum and gum arabic), methylcellulose, propylene glycol alginate and pectin.

When the material is a starch, it may be derived from any source, including cereal or root starches. Typical sources for the starches are cereals, tubers, roots, legumes and fruits. The native source can be any variety of corn (maize), pea, potato, sweet potato, banana, barley, wheat, rice, oat, sago, amaranth, tapioca, arrowroot, canna, sorghum and waxy and high amylose varieties thereof. As used herein, "waxy" is intended to include a starch containing no more than about 10%, particularly no more than about 5%, more particularly no more than about 3%, and most particularly no more than about 1% amylose by weight. As used herein, the term "high amylose" is intended to include a starch containing at least about 40%, particularly at least about 70%, and more particularly at least about 80% by weight amylose. As used herein, the term "amylose-containing" includes those starches containing at least about 10% by weight amylose.

The starch may be a native starch or a modified starch. Modified starch as used herein is intended to include starches that have been modified physically, chemically and/or by hydrolysis. Physical modification includes by shearing or thermally inhibiting, for example by the process described in U.S. Patent No. 5,725,676 to Chiu *et al*.

The starch can be chemically modified. Chemically modified starches include, without limitation, crosslinked, acetylated, organically esterified, hydroxyethylated, hydroxypropylated, phosphorylated, inorganically esterified, cationic, anionic, nonionic and zwitterionic, and succinate and substituted succinate derivatives thereof. Such modifications are well known in the art, for example, as described in MODIFIED STARCHES: PROPERTIES AND USES, Wurzburg, O.B., Editor, CRC Press, Inc. Florida (1986).

The starches can also be hydrolyzed. Suitable starches include fluidity or thin-boiling starches prepared by oxidation, acid hydrolysis, enzyme hydrolysis, heat and/or acid dextrinization. These processes are well known in the art.

Any starch having suitable properties for use herein may be purified by any method known in the art to remove starch off-flavors and colors that are native to the polysaccharide or created during processing. Suitable purification processes for treating starches are disclosed in the family of patents represented by European Patent No. 554 818 to Kasica *et al*. Alkali washing techniques are also useful and described in the family of patents represented by U.S. Patent Nos. 4,477,480 to Seidel and 5,187,272 to Bertalan *et al*.

The material is used in its cold water swellable form. It can be obtained commercially in such form or can be converted to a cold water soluble material using techniques well known in the art, such as by drum-drying, spray-drying, extrusion, etc. Typical of such processes are those disclosed in U.S. Patent Nos. 3,137,592, 4,600,472, 4,280,851, 5,131,953, 5,188,674, 5,281,432, 5,318,635, 5,435,851 and 5,571,552, the disclosures of which are incorporated herein by reference.

Further suitable starches include cold water swellable (pregelatinized starches) that are known in the art and disclosed, for example, in U.S. Patent Nos. 4,465,702, 5,037,929 and 5,149,799. Conventional procedures for pregelatinizing starch are also known to those skilled in the art and described, for example, in Powell, E. L., *Production and Use of Pregelatinized Starch,* STARCH: CHEMISTRY AND TECHNOLOGY, Vol. II - Industrial Aspects, Chpt. XXII, pp. 523-536, Whistler, R. L. and Paschall, I. F. Editors, Academic Press, New York (1967).

The ideal barrier should be continuous and consistent throughout the temperature ranges to which the food product is subjected. The ideal barrier should also maintain and preferably contribute to the integrity of the composite food product.

The application of a dry, cold water swellable (hydratable), edible powder to at least one surface of a food product having components of differing water activities provides moisture barrier properties. The barrier can be applied before or after par-baking the crust or pastry dough. For swellable/hydrating powders to work as moisture barriers, a dry, uniform layer should be spread at the interface where migration occurs. A solution of the powder is not as effective because it incorporates too much water in the food system.

The powder may be combined with any other components/compounds to enhance any functionality and/or ease of application and manufacturing, such as films, adhesive agents, flow aides, lipids, waxes, proteins and coatings. The desired composition should form a continuous layer and, once contacted with moisture, should swell sufficiently so as to act as a moisture barrier within less than about one minute from contact. The powder provides a barrier that allows needed migration, thereby preventing pooling of the high moisture content. The swellable powder can be used in a variety of storage conditions, such as frozen, refrigeration and ambient.

In addition to inhibiting moisture migration, the dry powder-based barrier of the present invention adds to the appearance of products. For example, when added to pizza, after baking the pizza it has a more "full" appearance, the cheese is not as burnt and the crust cell structure is maintained. In other applications, *e.g.*, cheesecakes and ice cream sandwiches, the barrier helps stick the filling to the base with an overall firmer product base achieved. With pies, the product with the barrier does not have as much leakage and keeps its structure once cut. The disclosed barrier's organoleptic properties of taste, mouthfeel and aftertaste are imperceptible. The disclosed barrier is eaten as part of the whole food and the consumer is not aware of the barrier when the food product is consumed.

### TESTING PROCEDURES

### Water Migration

Water migration rate was measured by a Gravimetric Absorbency Testing System (GATS, manufactured by M/K Systems, Inc.). The sample to be tested is placed on a porous filter mounted in a movable stage. The movable stage is attached to a reservoir through a tube filled with water. The water reservoir sits on an analytical balance. During the test, water is drawn through the tube, and water lost from the reservoir is measured as a function of time. The instrument incorporates a mechanism that offsets the effects of gravity on absorbency tests. For the test, 0.500 +/-0.001 g of dry powder is weighed and spread evenly inside a plastic ring (45 mm inner diameter and 60 mm height) sitting on the surface of the filter paper (circles, 70 mm from Whatman®). The sample, including filter paper and plastic ring, is placed on the porous plate of the GATS, with the water lost from the reservoir recorded as a function of time. The experiment is conducted at room temperature. The samples were repeated to prove the reproducibility of the experiment.

### Settling Volume

The settling volume test procedure is as follows: 1.000 +/-0.001 g (anhydrate basis) of dry powder is weighed and dispersed into a 100 ml beaker containing 50 ml deionized water under vigorous stirring. After the sample is completely wet and dispersed in water, it is completely transferred to a 100 ml graduated cylinder. Water is added to bring the solution to 100 ml. The sample is kept undisturbed for at least 24 hours to allow complete settling. The settled phase volume is recorded as the settling volume.

### Food Model System

A food model system ("FMS") was developed consisting of milk crackers (Nabisco), pure nylon fabric cut from the leg of pantyhose, and commercially obtained Ragu® pizza sauce. Samples were run in at least triplicate with a control. Initial weight of the cracker was taken and the pieces of nylon fabric were applied. Barriers were applied over the cracker/nylon construction. After the barriers were evenly distributed, two tablespoons of sauce was spread over the cracker. The system was allowed to sit at room temperature for four hours. After time elapsed, the nylon fabric containing the barrier and sauce was removed and the final weight of the cracker was recorded. The texture of the cracker, powder and sauce were noted. The results were reported as average amount of weight gain per cracker.

Pre-formed films, formed-on coatings and disclosed barriers were evaluated using the FMS. Typically, the FMS with no barrier has a weight gain between 4.5 and 5.0 grams, with the cracker being soaked and falling apart. A weight gain of less than three grams is acceptable, with the cracker retaining some textural properties. A weight gain of two grams or less is ideal. The FMS is also used to test the temperature stability of the barrier.

### RESULTS

Water absorbency of the disclosed barrier measured by GATS is attributed to two mechanisms - wicking and swelling. Wicking and swelling play an opposite role in moisture barrier performance. Therefore, it is important that these two contributions be separated.

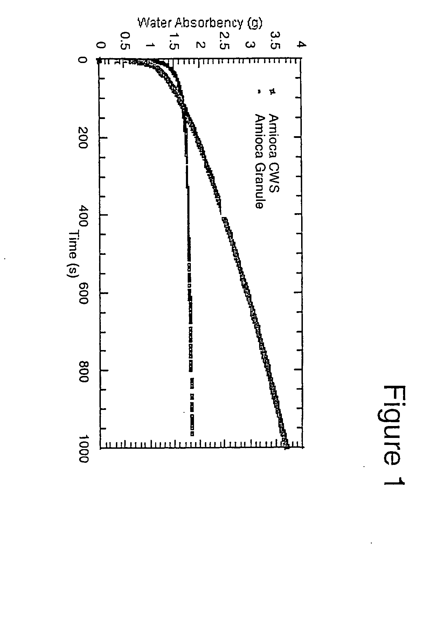

Figure 1 shows water absorbency curves of a granular starch and of the disclosed barrier (here, a cold water swellable ("CWS") starch). Because the granular starch is not swellable at room temperature, the water absorbency reflects only the amount of wicking. As shown in Figure 1, the water absorbency of the granular starch reaches equilibrium absorbency within about 100 seconds, and 90% absorbency within about 50 seconds. In contrast, the water absorbency of the disclosed barrier keeps growing during the measurement due to the swelling. Hence, wicking processes faster than swelling. Thus, the water absorbency of first 100 seconds measured by GATS is dominated by wicking.

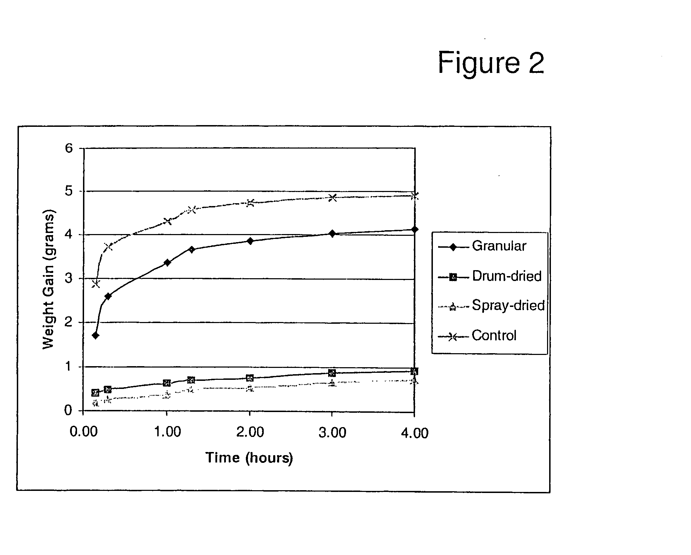

Barriers according to the present invention (here, drum-dried and spray-dried starch) were compared with granular (non-swellable) starch in the FMS. The weight of the cracker was measured at various times over a twenty-two hour interval. Figure 2 illustrates the weight gain of samples over a four-hour period since the control with no barrier leveled out at this point. Monitoring the weight gain of the cracker demonstrated that the control and the granular starch did not provide resistance to moisture migration as illustrated in Figure 2. The barriers according to the present invention provided resistance to moisture migration and had a weight gain of less than three grams.

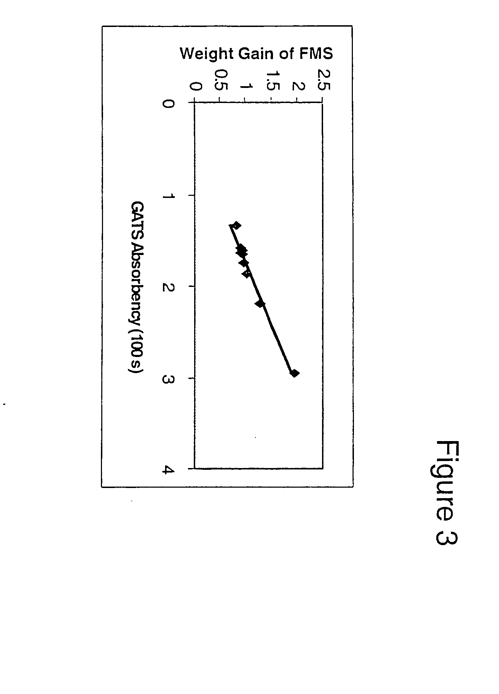

The correlation between GATS measurement and FMS test is shown in Figure 3. The samples include swellable powders (here, gums and CWS starches). The y-axis represents the weight gain in the food matrix at four hours of the FMS. A small weight gain in the matrix indicates that a small amount of water migrated into the matrix, *i*.*e*., good moisture barrier performance. The more water absorbency at 100 seconds, the more weight gain in the food model system. During migration, the powder layer hydrates gradually, starting from the area contacted with water. The fine particle size sample requires more time to completely wet the whole layer than the coarse particle layer. Some samples form a soft film-like layer that can be peeled off from the filter paper holding the powder layer. Some samples form a gel-like or very viscous layer after the samples swell. These samples have a very good moisture barrier performance based on FMS study. It is known that swellable particles change to larger and softer particles when they are swollen. These soft swollen particles, especially those particles possessing large swelling ratio (defined as the volume ratio of fully swollen particle to dry particle) are able to "fuse" to form the layer based GATS result. Further, the larger the swelling ratio, the softer the particles are when fully swollen. The layer blocks water wicking and slow down water diffusion, thereby working as a moisture barrier.

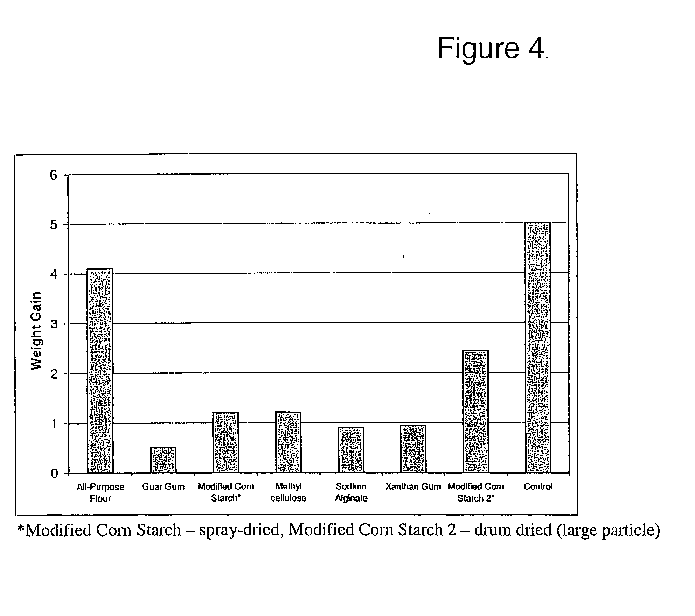

A majority of the hydrocolloids that are swellable, such as guar gum, methylcellulose, sodium alginate, and locust bean gum, provided inhibition to moisture migration in the FMS as illustrated in Figure 4. All-purpose flour did not form a barrier and was comparable in weight gain and texture to the control. Gums that do not swell due to particle size or viscosity do not work as well. Other hydrocolloids tested were propylene glycol alginate, gellan gum, cellulose gum, pectin and konjac gum. All were comparable to the hydrocolloids above with improvements beyond the control.

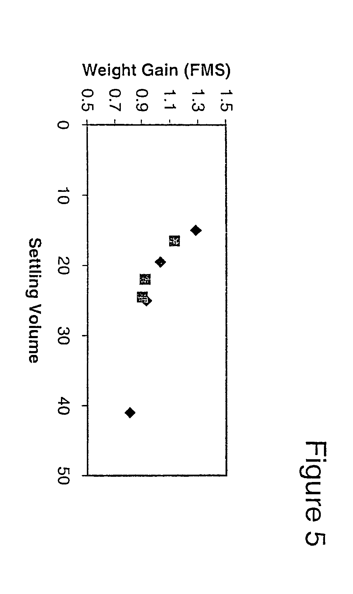

The swellable particles work as a moisture barrier for food application not only by means of reducing wicking and diffusion rate of water, but also by holding water in the particle due to swelling. Figure 5 shows a plot of a trend of settling volume effect on moisture barrier performance (water pickup on substrate) as a function of swelling volume. Generally, the larger the swelling volume, the better moisture barrier is. Accordingly, samples with relative high amount of wicking (based on the GATS measurement) are able to block more than half the amount of water moving from the sauce into the matrix. These samples normally have relative large particle size, low packing density and low swelling volume. After swelling, the samples form a grainy or pulpy wet layer. The moisture barrier performance of the grainy layer is not as good as the one forming a soft film-like or viscous layer. The difference between the GATS measurement and FMS test is that a large amount of water immediately reaches the front of moisture barrier for GATS, but in the FMS test, water gradually moves from the sauce to the moisture barrier. As shown on the Figure 2 control curve of the FMS, 60% of the water drains into the matrix in 15 minutes and 80% of the water reaches the matrix in a half hour. Therefore, the moisture barrier has time to swell and hold water in the barrier layer, although the swelling is a slower process than wicking. In addition to the amount of water held in the barrier layer, the swelling volume also indicates the rigidity of the wet particle. The larger the swelling volume, the softer the particle is. As a result, it is easy to "fuse" and form a continuous layer that reduces wicking and diffusion. This is another attribute of higher swelling materials.

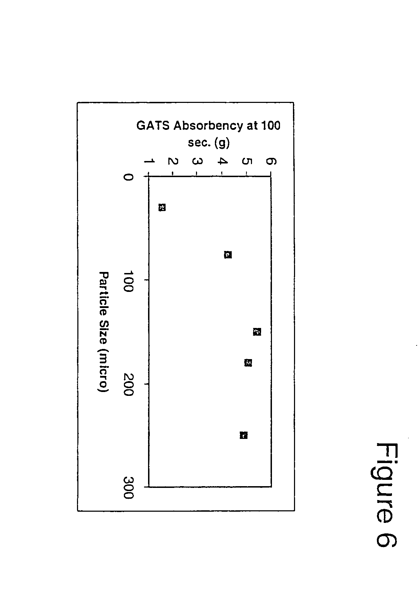

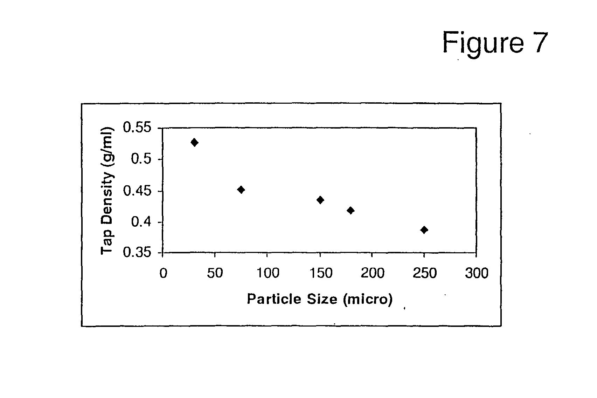

Figure 6 shows the particle size effect on wicking. All different particle size fractions were separated from one commercial product (here, a drum dried modified starch). Therefore, the chemical and processing variables are same for all fractions and, consequentially, the swelling volumes are same for all fractions. The amount of wicking increases with particle size from about 30 to about 150 microns, and then levels off as shown in Figure 6. It is also seen that the packing or tapped density increases with decreasing particle size, as illustrated in Figure 7. Obviously, a smaller size particle has larger surface area per unit mass and will swell faster than a larger size particle having less surface area per unit mass. Accordingly, the smaller size particle has a better position in the competition of swelling and wicking than the larger size particle. The packing density reflects the porosity of the sample. The higher the packing density, the lower the porosity is, with less wicking occurring. Also, a continuous layer forms faster from a densely packed sample that blocks wicking and improves the moisture barrier properties.

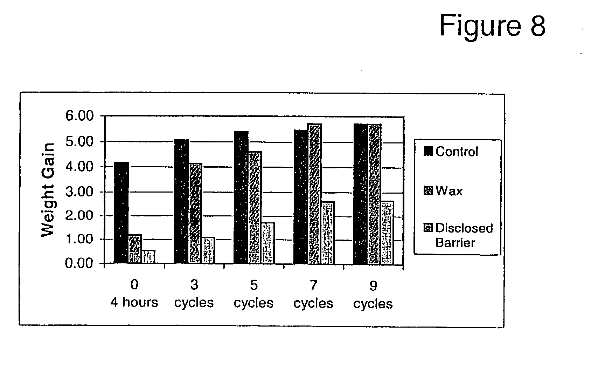

The freeze/thaw ("F/T") stability of barriers according to the present invention was tested and compared against a control having no barrier and a wax preformed film using the FMS. Figure 8 shows the results at various cycles. Both the wax film and the disclosed barrier prevented the initial moisture migration that adversely effects texture within the first four hours. However, the wax preformed film cracked during F/T cycling, indicating its undesirability for use as a moisture barrier. The disclosed barrier had significantly less weight gain than the control and retained textural properties even after nine F/T cycles.

Through commercial product evaluation, potential was observed for a moisture barrier in other products such as pizza, lemon meringue pie, cherry pie, cheesecake, cherry cobbler, ice cream sandwiches, and yogurt.

The moisture barrier powder can be applied in a variety of manners. In industry, waterfall (stream of powder), flour duster or sifter, or powder sprayer techniques are typically used to apply powders. In the waterfall system, powder is flooded over the substrate and the excess vacuumed or blown off. Spraying systems include both powder and liquid sprayers. Powder sprayers generate an electrostatic charge so that food oppositely charges sticks on the product. Liquid sprayers can be used to spray a solution that helps stick the powder or contain the powder.

Most of these techniques require a recovery system for the powder. The type of technique utilized can affect the type of powder used. For example, the waterfall technique requires a denser and less dusty powder.

The density of the powder can be changed to make the powder heavier, less dusty and easier to apply. This can be accomplished by a variety of means, including but not limited to changing the particle size of the powder, combining the powder with fillers such as sugar, granular starch and/or flour, dry blending and/or coprocessing the powder with a fat such as vegetable oil, mineral oil, butter and/or shortening, and changing the moisture content of the powder.

The barrier powder can also be delivered by dispersing it in a solution such as water or fat, including vegetable oil, butter and shortening. Each has their shortcomings. For example, the water solution limits the amount of solids. Butter and shortening solidify at room temperature, making them difficult to apply. The oils tend to make food applications taste oily.

A sticking agent can also be applied to the food substrate either before or after the powder barrier is added to the substrate. Examples of sticking agents include water, oil, and high solids solutions.

### EXAMPLES

### I. Pizza

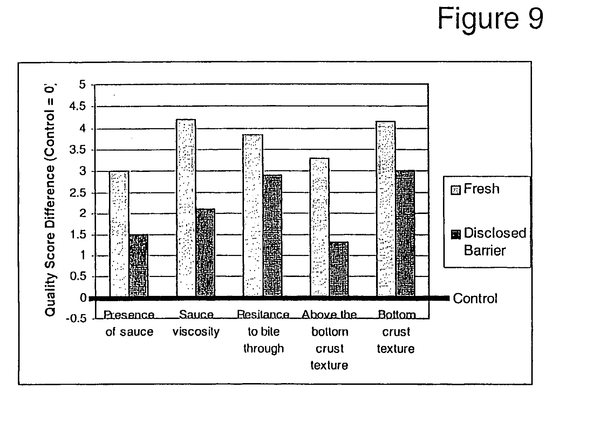

Pizzas were made using pizzeria-baked crusts, commercial pizza sauce and barriers according to the present invention. A descriptive analysis panel was used to evaluate the pizza after freeze/thaw cycling. The reproducibility of the panel was checked periodically with blind controls and fresh samples with the standard deviation of +/-1 score. Sensory evaluations are presented in Figure 9. The fresh pizza was prepared just prior to cooking, simulating the ideal with little moisture migration. The results show that the addition of the barrier of the present invention (here, a CWS starch powder) improved the crust texture beyond the control and approached the fresh sample.

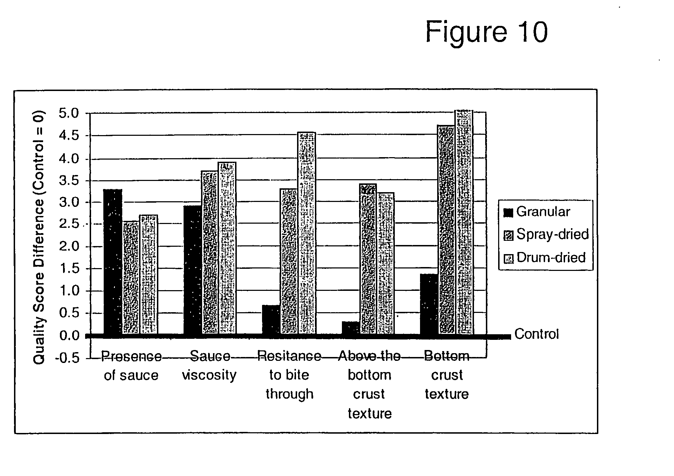

In Figure 10, sensory aspects of the pizza food system were evaluated by comparing barriers of the present invention (here, drum-dried and spray-dried starch) with a granular (i.e., non-swellable) starch barrier of the same base. The granular starch barrier did not inhibit moisture migration and was comparable to the control. Both the spray-dried and drum-dried products, which are made to hydrate in water without cooking, performed the best. Both had significant improvement in resistance to bite, above the bottom crust texture, and bottom crust texture.

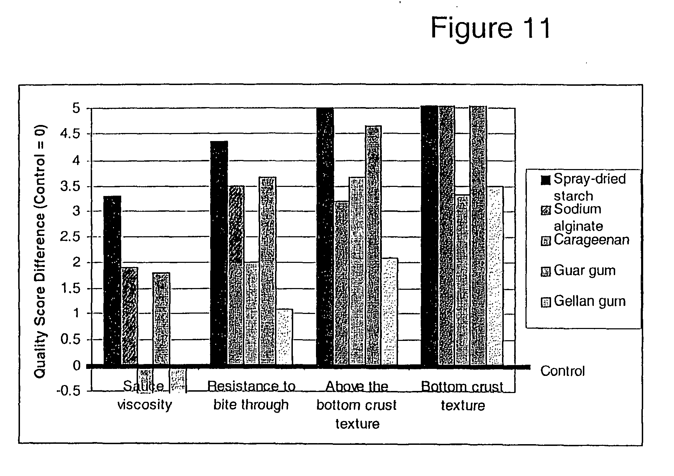

Other hydrocolloids that swell when placed in contact with water, including carageenan, guar gum, gellan gum and alginate, were organoleptically evaluated with CWS starch. The sensory results compared with the control are reported in Figure 11. Alginate and guar gum had very crunchy bottom crusts and good crust cell structure. All four gums adversely affected the flavor of the sauce. The gums, especially guar and alginate performed similarly to CWS starch.

### II. Lemon Meringue Pie (without meringue):

Barriers according to the present invention were compared with a control in lemon pies. The barriers were sprinkled over commercially available frozen 9-inch deep-dish piecrusts (Flower Industries® Pet-Ritz®) and then baked at about 400°F for about 13 minutes. The crusts were allowed to cool to room temperature before the lemon pie filling was added. The lemon filling contained water, sugar, cornstarch, egg yolks, lemon juice butter, and salt. The pies were stored in the refrigerator and evaluated after one, two, and three days of storage.

Overall, the barriers absorbed some of the water from the filling, thereby inhibiting water migration during refrigeration storage. The crust with the barrier was firmer and crispier than the control with no barrier after three days in the refrigerator. The control was mushy and wet after two days in the refrigerator. In the lemon pie, the barrier also aided in the pie remaining intact once cut into, maintaining structural integrity and/or preventing syneresis.

### III. Cherry Pies

Barriers according to the present invention were compared with a control in cherry pies. The barrier was sprinkled over a commercially available frozen deep-dish piecrust (Flowers Industries® Oronoque Orchards®). Commercial cherry pie filling (Comstock® from Birds Eye® Foods) was added and the pies were baked on a cookie sheet at 400°F for about 55 minutes. Evaluations were conducted on pies initially, day one, and day two after refrigeration. Another set of pies were baked, then frozen. Frozen pies were evaluated after 3, 7, and 10 cycles. A single cycle consisted of six hours at room temperature and eighteen hours frozen.

In cherry pies with the disclosed barrier the filling did not spill over as was seen in the control pies. The barrier absorbed some of the water from the filling, which formed the barrier while keeping the pie intact. The crust with the disclosed barrier was firmer and crispier than the control with no barrier after two days in the refrigerator. In the frozen pies, after three cycles the control was mushy and wet. After ten cycles the crust of the frozen pie with the barrier was firm and dry. The disclosed barrier may be also added to partially baked piecrust prior to adding the filling.

### IV. A. Ice Cream Sandwiches

Ice cream sandwiches with and without the present barrier were compared. The disclosed barrier was spread evenly on the inside of commercially available cocoa cookies. Using a 1-inch thick cookie cutter the ice cream was sliced and placed in between two cookies. The sandwiches were put in bags and placed in a cycling freezer that cycled at 20°F for twelve hours and 0°F for twelve hours. The ice cream sandwiches were evaluated after one and two weeks.

In ice cream sandwiches the barrier provided a firmer textured cookie. The control cookies were soft and mushy, while the cookies with the barrier were firmer after two weeks of cycling. The barrier may also be applied before baking the cookies/wafers for the ice cream sandwiches.

### IV. B. Ice Cream Sandwiches with Chocolate Coated Cookies

Chocolate compound coatings with and without the present barrier mixed in were compared using ice cream sandwiches. The chocolates were melted and the cookies were enrobed. The disclosed barrier at 20% (w/w), ideally 5-10% (w/w), was mixed in the coating. The coatings were applied to previously baked commercially available sugar cookies. Using a 1-inch thick cookie cutter, ice cream was sliced and placed between two cookies with the coating touching the ice cream. The sandwiches were put in bags and placed in a cycling freezer that cycled at 20°F for twelve hours and 0°F for twelve hours. The ice cream sandwiches were evaluated after two weeks.

The swellable powders can be added to films or coating that cover the food substrate to aid in inhibiting moisture migration. The chocolate compound coatings that contained the disclosed barrier inhibited moisture migration more than the chocolate compound coating without the added disclosed barrier. The disclosed barrier absorbed some of the water from the ice cream so the excess water during cycling did not further wet the cookie substrate. After two weeks in the cycling freezer, cookies with the barrier/powder in the compound coating had a firmer texture.

### IV. Cherry Cobbler with crumb topping

The crumb topping on the cherry cobbler was evaluated with or without the disclosed barrier. The cherry filling containing cherries, sugar, cornstarch and other flavor/colors was added to a pie dish and partially frozen. The barrier was applied to the top of the partially frozen cherry filling. The crumbs made from flour, sugar, shortening and salt were sprinkled over the cherry filling. The cobblers were frozen and cycled for four cycles, with one cycle being 1 hour at room temperature and frozen for at least three hours. The cobblers where baked from the frozen state at 400°F for at least forty minutes depending on the size and depth of the cobbler.

In this application example the barrier was added to the high moisture substrate, then the low moisture component was added. The barrier may also be added to the pie shell prior to filling and on top of the filling prior to topping (crust or crumb). The cobblers with the disclosed barrier between the filling and crumbs looked more ascetically pleasing. The fruit filling did not bleed through the crumbs. The crumbs were also crisp and not sunk into the filling. The product had an overall higher or fresh appearance. After scooping, the cobbler with the disclosed barrier did not have excess juice/filling come out and further wet the crumbs.

### V. Multi-layered Yogurt

Dry granola was either applied at the bottom or top of yogurt. The barrier was applied in between the dry granola and yogurt. The yogurts were stored at refrigeration temperature for one, two and three days. The yogurts were evaluated by stirring in the dry component and tasting.

The barrier between the yogurt and dry component inhibited migration and allowed the dry component to stay intact and firmer. The barrier also prevented syneresis of the yogurt, allowing the topping to stay drier. The barrier may be added between other layers in a yogurt, including fruit, cookies, puffed pieces, and flavor/spices.

### VI. Large Taste Test Panels

Reference tests were conducted on lemon pies and cherry pies. Lemon pies were prepared according to Example 3 and stored in the refrigerator for two days. The cherry pies were prepared according to Example 4 and were stored for two days in the refrigerator. The reference tests were conducted as follows:
1. A ballot instructing the panelist to evaluate firmness of the crust or cookie was given to 20-25 panelists.
2. Panelists were instructed to taste the control, which was either the sample with or without a barrier. The control was given a rating of 5 on a 10-point scale.
3. The panelists were given a coded test sample. The panelists were asked to rate the test samples using the reference score as an anchor point. If the test sample was better/firmer than the control, the sample was rated higher than 5 on the scale. Likewise, if the test sample was soggier than the control, it had a value lower than 5 on the scale.
4. The scores of each panelist for each test sample were tabulated and averaged. The least significant difference (LSD) intervals were calculated for each test sample.

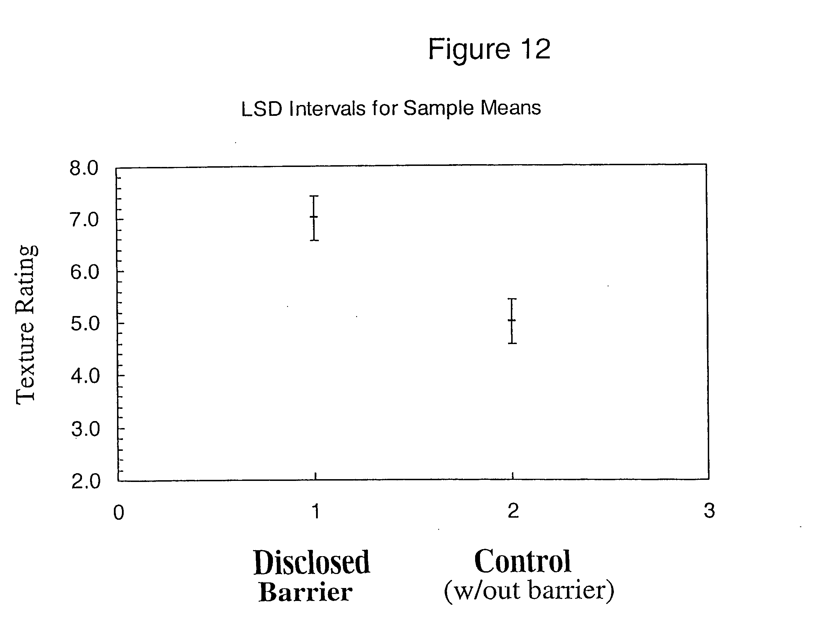

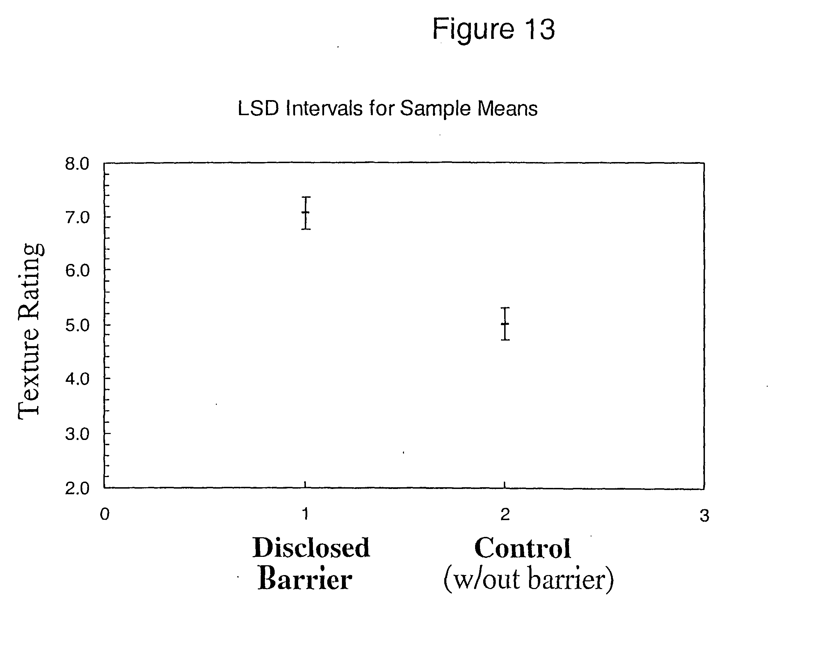

The reference taste test confirmed significant differences in firmness of the lemon piecrust between the pies with the disclosed barrier and without as illustrated in Figure 12. Test results on the cherry pies confirmed a significant difference between the crusts of the pies with and without the barrier as illustrated in Figure 13. The pie with the disclosed barrier had a drier, firmer texture. With reference to Figures 12 and 13, the higher the texture rating the firmer the product.

## Claims

1. A barrier for inhibiting moisture migration in a multi-domain food system comprising at least one hydrocolloid, wherein the barrier is placed between regions of differing water activity.

2. The barrier according to claim 1 wherein the at least one hydrocolloid is selected from the group consisting of cold water swelling starches, carageenan, gums, methylcellulose, propylene glycol alginate and pectin.

3. The barrier according to claim 1 wherein the at least one hydrocolloid is a water swellable hydrocolloid.

4. The barrier according to claim 1 wherein the at least one hydrocolloid is at least one cold water swellable starch.

5. The barrier according to claim 1 wherein the at least one hydrocolloid is at least one cold water swellable edible powder.

6. The barrier according to claim 5 wherein the at least one hydrocolloid is a blend of at least two cold water swellable edible powders.

7. The barrier according to claim 5 wherein the particle size of the powder is less than about 150 microns.

8. The barrier according to claim 5 wherein the at least one cold water swellable edible powder is at least one modified cold water swellable starch.

9. The barrier according to claim 1 further comprising one or more components selected from the group consisting of films, adhesive agents, flow aides, lipids, waxes, proteins and coatings.

10. A food system having reduced moisture migration between a region of higher water activity and a region of lower water activity, the food system comprising a moisture barrier having water swellable material.

11. The food system according to claim 11 wherein the water swellable material is at least one hydrocolloid.

12. The food system according to claim 12 wherein the at least one hydrocolloid is at least one modified cold water swellable starch.

13. The food system according to claim 11 wherein the water swellable material is at least one cold water swellable starch.

14. A method of inhibiting moisture migration in a food system comprising the step of applying a hydrocolloid containing barrier between regions of differing water activity.

15. The method according to claim 17 wherein the hydrocolloid containing barrier is comprised of at least one cold water swellable powder.

16. The method according to claim 17 further comprising the step of placing the hydrocolloid containing barrier in solution prior to application of the barrier between the regions.

17. The method according to claim 17 further comprising the step of applying the hydrocolloid containing barrier as a powder between the regions of differing water activity.
